# EUROPEAN PATENT APPLICATION

(11) **EP 4 174 987 A1**
(43) Date of publication of application: **03.05.2023**
(21) Application number: 22203674.1
(22) Date of filing: 25.10.2022
(51) Int. Cl.: H01M 4/36, H01M 4/38, H01M 4/587, H01M 10/0525, H01M 4/02

(54) **NEGATIVE ACTIVE MATERIAL COMPOSITE FOR RECHARGEABLE LITHIUM BATTERY, METHOD OF PREPARING THE SAME, NEGATIVE ELECTRODE INCLUDING THE SAME, AND RECHARGEABLE LITHIUM BATTERY INCLUDING THE SAME**

(30) Priority: 02.11.2021 KR 20210148941
(71) Applicant: Samsung SDI Co., Ltd., Yongin-si, Gyeonggi-do 17084 (KR)
(72) Inventor: KIM, Young-Min, 17084 Yongin-si (KR); KANG, Eunji, 17084 Yongin-si (KR); KIM, Youngugk, 17084 Yongin-si (KR); KIM, Yookyung, 17084 Yongin-si (KR); PARK, Sunil, 17084 Yongin-si (KR); SHIN, Changsu, 17084 Yongin-si (KR); OH, Doori, 17084 Yongin-si (KR); WON, JongMin, 17084 Yongin-si (KR); LEE, Dae-Hyeok, 17084 Yongin-si (KR); LEE, Jungho, 17084 Yongin-si (KR)
(74) Representative: Taor, Simon Edward William

(57) **Abstract**

A negative active material composite, a method of preparing the same, and a negative electrode and a rechargeable lithium battery including the same are provided, and specifically, in an embodiment, a negative active material composite for a rechargeable lithium battery includes compound particles represented by SiOₓ (0<x≤2.0); silicon nanoparticles having an average particle diameter (D50) of less than or equal to about 200 nm (provided that it is greater than about 0 nm); and amorphous carbon, wherein an internal pore volume is less than or equal to about 5.0 × 10⁻² cm³/g (provided that it is greater than about 0 cm³/g).

## Description

### CROSS-REFERENCE TO RELATED APPLICATION

This application claims priority to and the benefit of Korean Patent Application No. 10-2021-0148941 filed in the Korean Intellectual Property Office on November 2, 2021.

### BACKGROUND OF THE INVENTION

### (a) Field of the Invention

A negative active material composite, a method of preparing the same, a negative electrode including the same, and a rechargeable lithium battery are disclosed.

### (b) Description of the Related Art

Rechargeable lithium batteries are in the spotlight as power sources for driving medium to large devices such as hybrid vehicles and battery vehicles as well as small devices such as mobile phones, notebook computers, and smart phones.

As a negative active material for a rechargeable lithium battery, various types of carbon-based negative active materials including artificial graphite, natural graphite, hard carbon, and the like capable of intercalating/deintercalating lithium ions are widely used. Recently, research on non-carbon-based negative active materials such as silicon and tin to obtain higher capacity is being actively conducted.

However, the non-carbon-based negative active material has a large volume change due to charging and discharging, and thus cycle-life of the rechargeable lithium battery is shortened compared to the carbon-based negative active material.

### SUMMARY OF THE INVENTION

The present disclosure relates to a negative active material composite capable of simultaneously securing initial efficiency, cycle-life, and the like of a rechargeable lithium battery including the negative active material composite, a method of preparing the same, a negative electrode including the same, and a rechargeable lithium battery.

In an embodiment, a negative active material composite for a rechargeable lithium battery includes compound particles represented by SiOₓ (0<x≤2.0); silicon nanoparticles having an average particle diameter (D50) of less than or equal to about 200 nm (provided that it is greater than about 0 nm); and amorphous carbon, wherein an internal pore volume of the negative active material composite is less than or equal to about 5.0 × 10⁻² cm³/g (provided that it is greater than about 0 cm³/g).

In another embodiment, a method of preparing a negative active material composite for a rechargeable lithium battery includes spray-drying a solution including a solvent, compound particles represented by SiOₓ (0<x≤2.0), and silicon nanoparticles; compression-molding a mixture including the obtained product of the spray-drying and the amorphous carbon precursor in a pressure range of greater than about 10 Mpa; and heat-treating the obtained product of the compression-molding.

In another embodiment, a negative electrode for a rechargeable lithium battery includes a current collector and a negative active material layer on the current collector, wherein the negative active material layer includes the negative active material composite of the embodiment.

In another embodiment, a rechargeable lithium battery includes a positive electrode, a negative electrode, and an electrolyte, and the negative electrode is the negative electrode of the embodiment.

The negative active material composite of an embodiment may implement a rechargeable lithium battery that exhibits excellent initial efficiency, cycle-life, and the like.

According to an aspect, there is provided a negative active material as set out in claim 1. Additional features are set out in claims 2 to 11.

According to an aspect, there is provided a method as set out in claim 12. Additional features are set out in claim 13.

According to an aspect, there is provided a negative electrode as set out in claim 14.

According to an aspect, there is provided a rechargeable lithium battery as set out in claim 15.

### BRIEF DESCRIPTION OF THE DRAWINGS

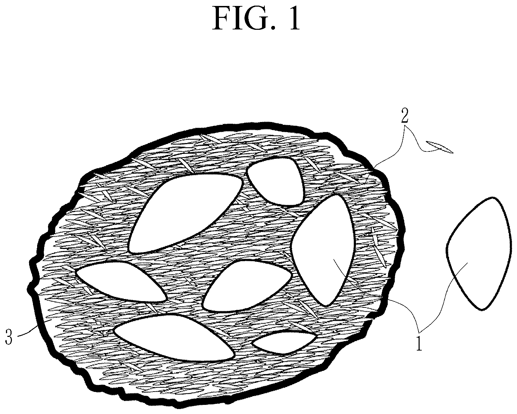

FIG. 1 is a schematic view of the negative active material composite according to an embodiment.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "a combination thereof" refers to a mixture, a laminate, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the "particle diameter" or "average particle diameter" may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

"Thickness" may be measured through a picture taken with an optical microscope such as a scanning electron microscope.

### (Negative Active Material)

In an embodiment, a negative active material composite for a rechargeable lithium battery includes compound particles represented by SiOₓ (0<x≤2.0); silicon nanoparticles having an average particle diameter (D50) of less than or equal to about 200 nm (provided that it is greater than about 0 nm); and amorphous carbon, wherein an internal pore volume of the negative active material composite is less than or equal to about 5.0 × 10⁻² cm³/g (provided that it is greater than about 0 cm³/g).

Before the negative active material composite according to an embodiment, SiO (silicon monoxide), SiC (silicon carbide), and the like have been proposed in order to suppress a volume change of a non-carbon-based negative active material (silicon, tin, etc.) as well as improve low capacity of a carbon-based negative active material (artificial graphite, natural graphite, hard carbon, etc.) and thus secure cycle-life characteristics.

Both the SiO and the SiC may increase capacity of a rechargeable lithium battery, compared with the carbon-based negative active material. However, the SiO is a negative active material that has high resistance and needs to be used by making its size small., may a little lower initial efficiency of the rechargeable lithium battery but secure cycle-life characteristics; the SiC is a negative active material that increases initial efficiency of the rechargeable lithium battery but is somewhat disadvantageous in securing cycle-life characteristics. As such, the capacity of the rechargeable lithium battery has trade-off relationship with the initial efficiency and cycle-life, which are very difficult to evenly increase.

The negative active material composite of an embodiment is a composite of compound particles 1 represented by SiOₓ (0<x≤2.0), silicon nanoparticles 2, and amorphous carbon 3, as shown in FIG. 1, which may compensate each disadvantage of the SiO and the SiC, while taking advantages thereof. Furthermore, the negative active material composite of an embodiment may have a specific surface area limited within an appropriate range by limiting a D50 particle diameter of the silicon nanoparticles within about 200 nm or less (provided that it is greater than about 0 nm) and simultaneously, limiting an internal pore volume of the composite of the negative active material composite within about 5.0 x 10⁻² cm³/g or less (provided that it is greater than greater than about 0 cm³/g) and thus secure initial efficiency and cycle-life of the rechargeable lithium battery at the same time.

Hereinafter, the negative active material composite of the embodiment is described in detail.

### Silicon Nanoparticles

In the negative active material composite of the embodiment, the silicon nanoparticles are a component contributing to increasing the capacity of the rechargeable lithium battery.

An average particle diameter (D50) of the silicon nanoparticles may be less than or equal to about 200 nm (provided that it is greater than about 0 nm), and a maximum particle diameter (Dₘₐₓ) may be less than or equal to about 300 nm (provided that it is greater than about 0 nm). For example, the average particle diameter (D50) of the silicon nanoparticles may be greater than or equal to about 50 nm, greater than or equal to about 60 nm, greater than or equal to about 70 nm, or greater than or equal to about 80 nm, and less than or equal to about 200 nm, less than or equal to about 150 nm, less than or equal to about 140 nm, less than or equal to about 130 nm, or less than or equal to about 115 nm. In addition, the maximum particle diameter (Dₘₐₓ) of the silicon nanoparticles may be greater than or equal to about 80 nm, greater than or equal to about 90 nm, greater than or equal to about 100 nm, or greater than or equal to about 110 nm, and less than or equal to about 300 nm, less than or equal to about 250 nm, less than or equal to about 240 nm, less than or equal to about 230 nm, or less than or equal to about 215 nm. Within these ranges, the side reaction between the silicon nanoparticles and the electrolyte may be suppressed, and the expansion of the silicon nanoparticles may be reduced, thereby improving initial efficiency and cycle-life characteristics of the rechargeable lithium battery.

A short axis length (a) of the silicon nanoparticles may be about 5 nm to about 50 nm, and a long axis length (b) of the silicon nanoparticles may be about 50 nm to about 300 nm. An aspect ratio (b/a) of the silicon nanoparticles may be about 4 to about 20. For example, the aspect ratio of the silicon nanoparticles may be greater than or equal to about 4, greater than or equal to about 5, greater than or equal to about 6, or greater than or equal to about 7, and less than or equal to about 20, less than or equal to about 18, less than or equal to about 16, or less than or equal to about 14. When the long axis length (b), short axis length (a), and aspect ratio (b/a) of the silicon nanoparticles each fall within the above ranges, side reactions between the silicon nanoparticles and the electrolyte may be suppressed, and the expansion of the silicon nanoparticles may be reduced, so that initial efficiency and cycle-life characteristics of the rechargeable lithium battery may be improved.

A full width at half maximum of an X-ray diffraction angle (2 theta) using CuKa ray at the (111) plane of the silicon nanoparticles may be about 0.3 ° to about 1.5 °. Within this range, cycle-life characteristics of the rechargeable lithium battery may be improved. The full width at half maximum of the X-ray diffraction angle (2theta) using CuKa ray at the (111) plane of the silicon nanoparticles may be achieved by adjusting the particle size of the silicon nanoparticles or changing the silicon nanoparticle preparing process.

A full width at half maximum of an X-ray diffraction angle (2 theta) using CuKa ray at the (111) plane of the silicon nanoparticles may be measured using XRD measuring equipment (manufacturer: Malvern Panalytical, product name: xpert pro) under the conditions of wavelength: Kα1 1.540598 (Å), scan rate: about 1.5 deg/min and 2theta window: 10 - 90°.

### Compound Particles Represented by SiOₓ (0<x≤2.0)

In the negative active material composite of the embodiment, the compound particles represented by SiOₓ (0<x≤2.0) are a component contributing to securing cycle-life characteristics of a rechargeable lithium battery.

The compound particles represented by SiOₓ (0<x≤2.0) e.g., SiO, SiO₂, etc. are materials with high resistance, and the average particle diameter (D50) and the maximum particle diameter (Dₘₐₓ) of the compound particles may be reduced to lower a resistance when the negative electrode is applied. Specifically, the average particle diameter (D50) of the compound particles represented by SiOₓ (0<x≤2.0) may be about 1 µm to about 10 µm, and the maximum particle diameter (Dₘₐₓ) may be about 5 µm to about 20 µm. For example, the average particle diameter (D50) of the compound particles represented by SiOₓ (0<x≤2.0) may be greater than or equal to about 1 µm, greater than or equal to about 2 µm, greater than or equal to about 3 µm, or greater than or equal to about 4 µm, and less than or equal to about 10 µm, less than or equal to about 9 µm, less than or equal to about 8 µm, less than or equal to about 7 µm, or less than or equal to about 6 µm. In addition, the maximum particle diameter (Dₘₐₓ) of the compound particles represented by the SiOx (0<x≤2.0) may be greater than or equal to about 5 µm, greater than or equal to about 6 µm, greater than or equal to about 7 µm, or greater than or equal to about 8 µm and less than or equal to about 20 µm, less than or equal to about 18 µm, less than or equal to about 16 µm, less than or equal to about 14 µm, or less than or equal to about 12 µm. Within these ranges, the resistance of the compound particles represented by SiOₓ (0<x≤2.0) upon application of the negative electrode may be minimized.

### Amorphous Carbon

In the negative active material composite of the embodiment, the amorphous carbon surrounds the outer surface of the silicon nanoparticles, so that the conductivity of the negative active material may be further improved, and contacts between the silicon nanoparticles and the electrolyte may be suppressed to reduce side reactions between them, and cycle-life characteristics of the rechargeable lithium battery may be secured. In addition, the amorphous carbon serves as a binder for binding the silicon nanoparticles to each other, thereby preventing the composite from breaking and maintaining its shape well.

The amorphous carbon may be soft carbon, hard carbon, a mesophase pitch carbonized product, calcined coke, or a combination thereof. The amorphous carbon, in contrast to crystalline carbon, effectively penetrates between silicon nanoparticles during the heat-treating process to reduce internal pores, thereby improving conductivity and effectively suppressing side reactions of the electrolyte.

### Composite

As described above, the negative active material composite of an embodiment, through a composite of compound particles represented by SiOₓ (0<x≤2.0), silicon nanoparticles, and amorphous carbon, may compensate each disadvantage of SiO and SiC, while taking advantages thereof and thus secure initial efficiency and cycle-life of the rechargeable lithium battery at the same time.

The composite may include the compound particles represented by SiOₓ (0<x≤2.0) and the silicon nanoparticles in a weight ratio (SiOₓ : silicon) of about 8:2 to about 2:8, specifically about 7:3 to about 3: 7, for example about 6:4 to about 4:6. Within the above ranges, an effect of improving the capacity of the rechargeable lithium battery by the silicon nanoparticles and an effect of securing the cycle-life of the rechargeable lithium battery by the compound particles represented by SiOₓ (0<x≤2.0) may be harmonized.

Furthermore, based on the total weight of the negative active material composite, the compound particles represented by SiOₓ (0<x≤2.0) may be included in an amount of about 5 wt% to about 90 wt%, specifically about 10 wt% to about 70 wt%, more specifically about 20 wt% to about 60 wt%, for example about 30 wt% to about 50 wt%; the silicon nanoparticles may be included in an amount of about 10 wt% to about 95 wt%, specifically about 20 wt% to about 75 wt%, more specifically about 20 wt% to about 60 wt%, for example about 30 wt% to about 50 wt%; and the amorphous carbon may be included in the balance. Within the above ranges, an effect of improving the capacity of the rechargeable lithium battery by the silicon nanoparticles, an effect of securing the cycle-life of the rechargeable lithium battery by the compound particles represented by the SiOₓ (0<x≤2.0), and the amorphous carbon may be harmonized.

The average particle diameter (D50) of the negative active material composite may be about 2 µm to about 15 µm, and the maximum particle diameter (Dₘₐₓ) may be about 5 µm to about 40 µm. For example, the average particle diameter (D50) of the composite may be greater than or equal to about 2 µm, greater than or equal to about 3 µm, greater than or equal to about 4 µm, or greater than or equal to about 5 µm, and less than or equal to about 15 µm, less than or equal to about 14 µm, less than or equal to about 13 µm, less than or equal to about 12 µm, or less than or equal to about 11 µm. In addition, the maximum particle diameter (Dₘₐₓ) of the composite may be greater than or equal to about 5, greater than or equal to about 7 µm, greater than or equal to about 10 µm, greater than or equal to about 11 µm, greater than or equal to about 12 µm, or greater than or equal to about 13 µm, and less than or equal to about 40 µm, less than or equal to about 38 µm, less than or equal to about 36 µm, less than or equal to about 34 µm, or less than or equal to about 32 µm. Within these ranges, an excessive increase in the specific surface area of the negative active material composite may be suppressed to reduce side reactions with the electrolyte, and to improve rate capability while suppressing a resistance of the rechargeable lithium battery.

The inside of the negative active material composite includes pores having a diameter of less than or equal to about 330 nm (provided that it is greater than about 0 nm), and a volume of the internal pores having the diameter is less than or equal to about 5.0 x 10⁻² cm³/g (provided that it is greater than about 0 cm³/g). For example, the diameter of the internal pore inside the negative active material composite may be greater than 0 nm, greater than or equal to about 10 nm, greater than or equal to about 20 nm, greater than or equal to about 30 nm, greater than or equal to about 40 nm, greater than or equal to about 50 nm, greater than or equal to about 60 nm, greater than or equal to about 70 nm, greater than or equal to about 80 nm, greater than or equal to about 90 nm, or greater than or equal to about 100 nm, and less than or equal to about 330 nm, 300 nm, less than or equal to about 250 nm, less than or equal to about 200 nm, less than or equal to about 180 nm, less than or equal to about 160 nm, less than or equal to about 140 nm, or less than or equal to about 120 nm. In addition, the volume of the internal pores having the above diameter may be greater than about 0 cm³/g, greater than or equal to about 0.1 × 10⁻² cm³/g, greater than or equal to about 0.2 × 10⁻² cm³/g, greater than or equal to about 0.3 × 10⁻² cm³/g, greater than or equal to about 0.4 × 10⁻² cm³/g, greater than or equal to about 0.5 × 10⁻² cm³/g, greater than or equal to about 0.6 x 10⁻² cm³/g, greater than or equal to about 0.8 × 10⁻² cm³/g, or greater than or equal to about 1.0 × 10⁻² cm³/g and less than or equal to about 5.0 × 10⁻² cm³/g, less than or equal to about 4.5 × 10-² cm³/g, less than or equal to about 4.0 × 10⁻² cm³/g, less than or equal to about 3.5 × 10⁻² cm³/g, or less than or equal to about 3.0 × 10⁻² cm³/g. When the diameter and volume of the internal pores inside the composite satisfy the aforementioned ranges, a side reaction between the silicon nanoparticles included in the composite and the electrolyte may be suppressed, and expansion of the silicon nanoparticles may be lowered, so that initial efficiency and cycle-life characteristics of the rechargeable lithium battery may be improved.

For reference, as described above, the volume of the internal pores having a diameter of nanometers (nm) may be quantitatively measured with a BJH (Barrett-Joyner-Halenda) analysis facility.

Meanwhile, the BET specific surface area of the negative active material composite may be about 0.1 cm²/g to about 10 cm²/g. For example, the BET specific surface area of the composite may be greater than or equal to about 0.1 cm²/g, greater than or equal to about 0.5 cm²/g, greater than or equal to about 1 cm²/g, greater than or equal to about 1.5 cm²/g, greater than or equal to about 2 cm²/g, greater than or equal to about 2.5 cm²/g, or greater than or equal to about 3 cm²/g, and less than or equal to about 10 cm²/g, less than or equal to about 9 cm²/g, less than or equal to about 8 cm²/g, less than or equal to about 7 cm²/g, less than or equal to about 5 cm²/g, less than or equal to about 3 cm²/g, or less than or equal to about 2.5 cm²/g. Within these ranges, an excessive increase in the specific surface area of the negative active material composite may be suppressed to reduce side reactions with the electrolyte, and to improve rate capability while suppressing a resistance of the rechargeable lithium battery.

The negative active material composite may include a matrix including the silicon nanoparticles and the amorphous carbon; and the compound particles represented by SiOₓ (0<x≤2.0) in the matrix. Specifically, the matrix may include secondary particles in which the silicon nanoparticles are aggregated; and a coating layer surrounding the outer surface of the secondary particle and the outer surface of the silicon nanoparticles and including the amorphous carbon. When achieving such a structure, while implementing an effect of improving capacity of the rechargeable lithium battery by the silicon nanoparticles and the effect of securing the cycle-life of the rechargeable lithium battery by the compound particles represented by SiOₓ (0<x≤2.0), the coating layer including the amorphous carbon surrounds the outer surface of the secondary particles and the outer surface of the silicon nanoparticles to maintain a dense structure, thereby reducing side reactions with the electrolyte and further improving cycle-life of the rechargeable lithium battery.

The coating layer may have a thickness of about 1 nm to about 900 nm, for example, about 5 nm to about 800 nm. Within these ranges, an internal pore size and a volume of the composite may be controlled, a degree of penetration of the electrolyte into the interior of the composite may be controlled, and a side reaction between the electrolyte and the negative active material composite may be minimized to improve cycle-life characteristics of the rechargeable lithium battery.

### (Method of Preparing Negative Active Material)

In an embodiment, a method of preparing a negative active material composite for a rechargeable lithium battery includes spray-drying a solution including a solvent, compound particles represented by SiOₓ (0<x≤2.0), and silicon nanoparticles; compression-molding a mixture including the obtained product of the spray-drying and the amorphous carbon precursor in a pressure range of greater than about 10 Mpa; and heat-treating the obtained product of the compression-molding.

Through the above series of processes, the negative active material composite of the aforementioned embodiment may be obtained. Hereinafter, descriptions overlapping with the above will be omitted and each process will be described.

### Spray-drying

First, in an embodiment, spray-drying the slurry including the solvent, compound particles represented by SiOₓ (0<x≤2.0), and silicon nanoparticles is performed.

The solvent is not particularly limited in embodiments as long as it is a solvent capable of dispersing both the compound particles represented by SiOₓ (0<x≤2.0) and the silicon nanoparticles, but may include isopropyl alcohol (IPA), ethanol (ETOH), and the like.

When preparing the solution, a weight ratio of the compound particles represented by SiOₓ (0<x≤2.0) and the silicon nanoparticles (SiOₓ: silicon) may be controlled to be about 8:2 to about 2:8, specifically about 7:3 to about 3:7, for example, about 6:4 to about 4:6. Accordingly, the weight ratio of the compound particles represented by SiOₓ (0<x≤2.0) and the silicon nanoparticles in the obtained product of the spray-drying and the final product according to the embodiment may be determined.

The spray-drying may be performed at about 120 °C to about 170 °C using a spray dryer. The obtained product of the spray-drying may include secondary particles in which the silicon nanoparticles are aggregated; and compound particles inside the secondary particle and represented by the SiOₓ (0<x≤2.0).

### Compression-molding

In the embodiment, the obtained product of the spray-drying is mixed with an amorphous carbon precursor and compression-molded.

The amorphous carbon precursor may include pitches such as coal-based pitch and petroleum-based pitch; resins such as phenol resins and furan resins; and hydrocarbons having 1 to 10 carbon atoms, and among them, the pitch may be used from the viewpoint of economy and the like.

The compression-molding may be performed within a pressure range of about 10 MPa to about 150 MPa and specifically, about 15 MPa to about 150 MPa, for example, about 20 MPa to about 125 MPa. When the obtained product of the spray-drying is compressed within this range, the initial efficiency and cycle-life characteristics of the rechargeable lithium battery may be improved by appropriately maintaining gaps between the silicon nanoparticles and controlling a internal pore volume of the obtained product of the compression-molding to suppress a side reaction of an electrolyte solution with the silicon nanoparticles.

The obtained product of the compression-molding may include a matrix precursor including the silicon nanoparticles and the amorphous carbon precursor; and the compound particles positioned inside the matrix precursor and represented by SiOₓ (0<x≤2.0). Specifically, the matrix precursor may include secondary particles in which the silicon nanoparticles are aggregated; and a coating layer surrounding the outer surface of the secondary particles and the outer surface of the silicon nanoparticles and including the amorphous carbon precursor.

### Heat-treating

In the embodiment, the obtained product of the compression-molding may be heat-treated.

The heat treatment may be performed at about 700 °C to about 1100 °C and specifically, about 800 °C to about 1050 °C, for example, about 900 °C to about 1000 °C. Within this range, the amorphous carbon precursor in the obtained product of the spray-drying may be carbonized. Accordingly, the amorphous carbon precursor is converted into amorphous carbon, and the obtained product of the compression-molding is converted into the composite of one embodiment, improving strength, conductivity, and the like and thus initial efficiency of the rechargeable lithium battery.

The heat treatment may be performed in a furnace under a nitrogen (N₂) atmosphere.

### (Negative Electrode)

In an embodiment, a negative electrode for a rechargeable lithium battery includes a current collector and a negative active material layer on the current collector, wherein the negative active material layer includes the negative active material composite according to the aforementioned embodiment.

As the negative electrode of the above embodiment includes the negative active material composite of the aforementioned embodiment, capacity, efficiency, and cycle-life of the rechargeable lithium battery may be simultaneously secured. Hereinafter, descriptions overlapping with the above will be omitted, and configurations other than the negative active material composite will be described.

### Current Collector

The current collector may include one selected from a copper foil, a nickel foil, a stainless steel foil, a titanium foil, a nickel foam, a copper foam, a polymer substrate coated with a conductive metal, and a combination thereof.

### Negative Active Material Layer

The negative active material layer essentially includes the negative active material composite of the aforementioned embodiment, and may optionally further include a negative active material different from the composite of the aforementioned embodiment.

The negative active material different from the composite of the aforementioned embodiment may include a material that reversibly intercalates/deintercalates lithium ions, lithium metal, lithium metal alloy, material being capable of doping and dedoping lithium, or a transition metal oxide.

The material that reversibly intercalates/deintercalates lithium ions may include, for example crystalline carbon, amorphous carbon, or a combination thereof as a carbon-based negative active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be a weight ratio of about 99:1 to about 33:66. The silicon particles may be SiOₓ particles, and in this case, the range of x in SiOₓ may be greater than about 0 and less than about 2. As used herein, when a definition is not otherwise provided, an average particle diameter (D50) indicates a particle where an accumulated volume is about 50 volume% in a particle distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 90:10.

In the negative active material layer, the negative active material may be included in an amount of about 95 wt% to about 99 wt% based on the total weight of the negative active material layer.

In an embodiment, the negative active material layer further includes a binder, and may optionally further include a conductive material. The content of the binder in the negative active material layer may be about 1 wt% to about 30 wt% based on the total weight of the negative active material layer. In addition, when the conductive material is further included, the negative active material layer may include about 50 wt% to about 98 wt% of the negative active material, about 1 wt% to about 30 wt% of the binder, and about 1 wt% to about 30 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. As the alkali metal, Na, K, or Li may be used. The amount of such a thickener used may be about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminum silver, and the like; a conductive polymer such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal, and a combination thereof.

### (Rechargeable Lithium Battery)

In another embodiment, a rechargeable lithium battery includes a positive electrode; a negative electrode; and an electrolyte, wherein the negative electrode is the negative electrode of the aforementioned embodiment.

As the rechargeable lithium battery of the embodiment includes the negative electrode of the aforementioned embodiment, the capacity, efficiency, and cycle-life of the rechargeable lithium battery may be simultaneously secured. Hereinafter, descriptions overlapping with those described above will be omitted, and configurations other than the negative electrode will be described.

### Positive Electrode

The positive electrode includes a current collector and a positive active material layer on the current collector. According to an embodiment, the positive electrode may have a structure in which a current collector, a positive active material layer, a functional layer, and an adhesive layer are stacked in this order.

The positive active material layer may include a positive active material, and may further include a binder and/or a conductive material.

The positive active material may include lithiated intercalation compounds that reversibly intercalate and deintercalate lithium ions. Examples of the positive active material may include a compound represented by any one of the following chemical formulas:

LiₐA_{1-b}X_{b}D₂ (0.90 ≤ a ≤ 1.8, 0 ≤ b ≤ 0.5);

LiaA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}CO_{b}X_{c}D_{α} (0.90 ≤ a ≤1.8, 0 ≤ b ≤ 0.5, 0 ≤ c ≤ 0.5, 0 < α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0≤ b ≤ 0.5, 0 ≤ c ≤ 0.05, 0 < α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{b}E_{c}G_{d}O₂(0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCOG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2); and

LiₐFePO₄ (0.90 ≤ a ≤ 1.8).

In chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a combination thereof. In the coating layer forming process, a method that does not adversely affect the physical properties of the positive active material, for example, spray coating, dipping, and the like may be used.

The positive active material may include, for example, a lithium nickel composite oxide represented by Chemical Formula 11.

[Chemical Formula 11] Liₐ₁₁Niₓ₁₁M¹¹_{y11}M¹²_{1-x11-y12}O₂

In Chemical Formula 11, 0.9≤a11≤1.8, 0.3≤x11≤1, 0≤y11≤0.7, and M¹¹ and M¹² are each independently Al, B, Ce, Co, Cr, F, Mg, Mn, Mo, Nb, P, S, Si, Sr, Ti, V, W, Zr, or a combination thereof.

In Chemical Formula 11, 0.4≤x11≤1 and 0≤y11≤0.6, 0.5≤x11≤1 and 0≤y11≤0.5, 0.6≤x11≤1 and 0≤y11≤0.4, or 0.7≤x11≤ 1 and 0≤y11≤0.3, 0.8≤x11≤1 and 0≤y11≤0.2, or 0.9≤x11≤1 and 0≤y11≤0.1.

As a specific example, the positive active material may include a lithium nickel cobalt composite oxide represented by Chemical Formula 12.

[Chemical Formula 12] Liₐ₁₂Niₓ₁₂Co_{y12}M¹³_{1-x12-y12}O₂

In Chemical Formula 12, 0.9≤a12≤1.8, 0.3≤x12<1, 0<y12≤0.7, and M¹³ is Al, B, Ce, Cr, F, Mg, Mn, Mo, Nb, P, S, Si, Sr, Ti, V, W, Zr, or a combination thereof.

In Chemical Formula 12, 0.3≤x12≤0.99 and 0.01≤y12≤0.7, 0.4≤x12≤0.99 and 0.01≤y12≤0.6, 0.5≤x12≤0.99 and 0.01≤y12≤0.5, 0.6≤x12≤0.99 and 0.01≤y12≤0.4, 0.7≤x12≤0.99 and 0.01≤y12≤0.3, 0.8≤x12≤0.99 and 0.01≤y12≤0.2, or 0.9≤x12≤0.99 and 0.01≤y12≤0.1.

As a specific example, the positive active material may include a lithium nickel cobalt composite oxide represented by Chemical Formula 13.

[Chemical Formula 3] Liₐ₁₃Niₓ₁₃Co_{y13}M¹⁴_{z13}M¹⁵_{1-x13-y13-z13}O₂

In Chemical Formula 13, 0.9≤a13≤1.8, 0.3≤x13≤0.98, 0.01≤y13≤0.69, 0.01≤z13≤0.69, M¹⁴ is Al, Mn, or a combination thereof, and M¹⁵ is B, Ce, Cr, F, Mg, Mo, Nb, P, S, Si, Sr, Ti, V, W, Zr, and a combination thereof.

In Chemical Formula 13, 0.4≤x13≤0.98, 0.01≤y13≤0.59, and 0.01≤z13≤0.59, 0.5≤x13≤0.98, 0.01≤y13≤0.49, and 0.01≤z13≤0.49, or 0.6≤x13≤ 0.98, 0.01≦y13≦0.39, and 0.01≦z13≦0.39, or 0.7≦x13≦0.98, 0.01≦y13≦0.29, and 0.01≦z13≦0.29, 0.8≦x13≦0.98, 0.01≦y13≦0.19, and 0.01 ≤z13≤0.19, or 0.9≤x13≤0.98, 0.01≤y13≤0.09, and 0.01≤z13≤0.09.

The content of the negative active material may be about 90 wt% to about 98 wt%, or for example, about 90 wt% to about 95 wt%, based on the total weight of the positive active material layer. Each content of the binder and the conductive material may be about 1 wt% to about 5 wt%, based on the total weight of the positive active material layer.

The binder improves binding properties of positive active material particles with one another and with a current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but embodiments are not limited thereto.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

An aluminum foil may be used as the positive current collector, but embodiments are not limited thereto.

### Separator

The separator separates a positive electrode and a negative electrode and provides a transporting passage for lithium ions and may be any generally-used separator in a lithium ion battery. In other words, it may have low resistance to ion transport and excellent impregnation for an electrolyte. For example, separator may be selected from a glass fiber, polyester, Teflon, polyethylene, polypropylene, polytetrafluoroethylene, or a combination thereof. It may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multilayered structure.

### Electrolyte

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. The carbonate-based solvent may be dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may be methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

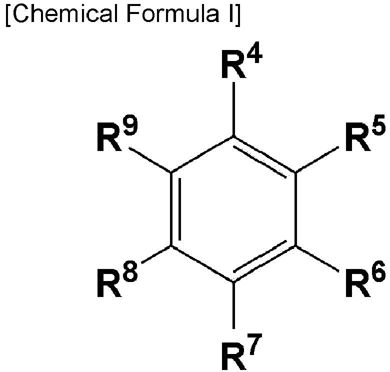

In Chemical Formula I, R⁴ to R⁹ are the same or different and are selected from hydrogen, a halogen, a C1 to C10 alkyl group, a haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II in order to improve cycle-life of a battery.

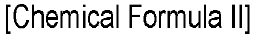

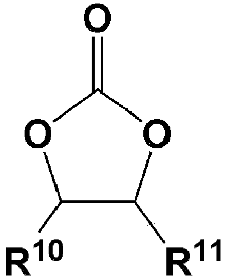

In Chemical Formula II, R¹⁰ and R¹¹ are the same or different, and are selected from hydrogen, a halogen, a cyano group, a nitro group, and fluorinated C1 to C5 alkyl group, provided that at least one of R¹⁰ and R¹¹ is selected from a halogen, a cyano group, a nitro group, and fluorinated C1 to C5 alkyl group, but both of R¹⁰ and R¹¹ are not hydrogen.

Examples of the ethylene-based carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF4, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ+₁SO₂)(C_{y}F_{2y+1}SO₂) (wherein x and y are natural numbers, for example, an integer ranging from 1 to 20), lithium difluoro(bisoxolato) phosphate, LiCI, Lil, LiB(C₂O₄)₂ (lithium bis(oxalato) borate; LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

Hereinafter, examples of the present invention and comparative examples are described. It is to be understood, however, that the examples are for the purpose of illustration and are not to be construed as limiting the present disclosure.

### [internal Pores of Negative Active Material Composite]

### Example 1

### (1) Preparation of Negative Active Material Composite

As a solvent, a mixed solvent including IPA and ETOH in a volume ratio of 3:7 was prepared. To 80 g of the mixed solvent, 5 g of silicon nanoparticles (D50: 100 nm) and 5 g of SiO particles (D50: 3 µm) of Table 1 were added and then, dispersed therein. Accordingly, a solution in which the silicon nanoparticles and the SiO particles were uniformly dispersed in the mixed solvent was obtained.

The solution was spray-dried at 150 °C and a spray rate of 60 g/min by using a spray drier.

6 g of the obtained product of the spray-drying was mixed with 6 g of petroleum-based pitch, which is a type of amorphous carbon, and this mixture was compression-molded under a pressure of 20 Mpa for 3 minutes.

The obtained compression-molded product was heat-treated at 1000 °C under an N₂ atmosphere, preparing a negative active material composite.

### (2) Manufacture of Negative Electrode

A negative active material slurry was prepared by mixing 70 wt% of the negative active material composite, 15 wt% of a conductive material (Super-P), and 15 wt% of a binder (polyacrylic acid (PAA)) in water as a solvent. The negative active material slurry was coated on one surface of a copper foil with a width of 76.5 mm, a length of 48.0 mm, and a thickness of 10 µm and then, dried and compressed, manufacturing a negative electrode. Herein, the negative active material slurry was coated in a die coating method.

### (3) Manufacture of Positive Electrode

A positive active material slurry was prepared by mixing 95 wt% of LiCoO₂ as a positive active material, 3 wt% of polyvinylidene fluoride as a binder, and 2 wt% of ketjen black as a conductive material in an N-methylpyrrolidone solvent. The positive active material slurry was coated on one surface of an aluminum current collector with a width of74.5 mm, a length of 45.0 mm, and a thickness of 12 µm and then, dried and compressed, manufacturing a negative electrode. Herein, the positive active material slurry was coated in the die coating method.

### (4) Manufacture of Battery Cell

A polyethylene separator with a width: 76.5 mm, a length of 48.0 mm, and a thickness of 14 µm was prepared and then, inserted between the negative electrode and the positive electrode and then, assembled together. Herein, the coating surface of the negative electrode was in contact with the separator.

The electrode assembly was housed in a pouch, and an electrolyte solution prepared by adding 1.10 M LiPF₆ lithium salt and 10% of FEC to a mixed solvent of ethylene carbonate and diethyl carbonate in a volume ratio of 50:50 was injected thereinto, manufacturing a rechargeable lithium battery cell.

### Example 2

A negative active material composite was prepared in the same manner as in Example 1 by changing the compression-molding pressure into 30 Mpa. Subsequently, a negative electrode and a rechargeable lithium battery cell of Example 2 were manufactured in the same manner as in Example 1 except for using this negative active material composite.

### Example 3

A negative active material composite was prepared in the same manner as in Example 1 by changing the compression-molding pressure into 50 Mpa. Subsequently, a negative electrode and a rechargeable lithium battery cell of Example 3 were manufactured in the same manner as in Example 1 except for using this negative active material composite.

### Example 4

A negative active material composite of Example 4 was prepared in the same manner as in Example 1 by changing the compression-molding pressure into 100 Mpa. Subsequently, a negative electrode and a rechargeable lithium battery cell of Example 4 were manufactured in the same manner as in Example 1 except for using this negative active material composite.

### Comparative Example 1

5 g of SiO particles (D50: 3.0 µm) and 5 g of SiC particles (D50: 8.4 µm) were mixed to prepare a negative active material of Comparative Example 1. A negative electrode and a rechargeable lithium battery cell of Comparative Example 1 were manufactured in the same manner as in Example 1 except for using this negative active material composite

### Comparative Example 2

A negative active material composite of Comparative Example 2 was prepared in the same manner as in Example 1 by changing the compression-molding pressure into 1 Mpa. Subsequently, a negative electrode and a rechargeable lithium battery cell of Comparative Example 2 were manufactured in the same manner as in Example 1 except for using this negative active material composite.

### Comparative Example 3

A negative active material composite of Comparative Example 3 was prepared in the same manner as in Example 1 by changing the compression-molding pressure into 10 Mpa. Subsequently, a negative electrode and a rechargeable lithium battery cell of Comparative Example 3 were manufactured in the same manner as in Example 1 except for using this negative active material composite.

**(Table 1)**

| | Type of negative active material | Si nanoparticle SPEC | | | |
|---|---|---|---|---|---|
| | | Shape | D50 (nm) | Aspect ratio | XRD full width at half maximum (°) |
| Comparative Example 1 | SiO : SiC = 5 : 5 (blending) | - | - | - | - |
| Comparative Example 2 | SiO@SiC | flake | 100 | 4-20 | 0.61 |
| Comparative Example 3 | SiO@SiC | flake | 100 | 4-20 | 0.61 |
| Example 1 | SiO@SiC | flake | 100 | 4-20 | 0.61 |
| Example 2 | SiO@SiC | flake | 100 | 4-20 | 0.61 |
| Example 3 | SiO@SiC | flake | 100 | 4-20 | 0.61 |
| Example 4 | SiO@SiC | flake | 100 | 4-20 | 0.61 |

In Table 1, the full width at half maximum of an X-ray diffraction angle (2 theta) using CuKa ray at the (111) plane of the silicon nanoparticles may be measured using XRD measuring equipment (manufacturer: Malvern Panalytical, product name: xpert pro) under the conditions of wavelength: Kα1 1.540598 (Å), scan rate: about 1.5 deg/min and 2theta window: 10 - 90°.
The negative active material composites with a SiO@SiC structure according to Examples 1 to 4 and Comparative Examples 2 and 3 were prepared by using the same raw materials such as silicon nanoparticles and the like but varying the compression-molding pressure, respectively. On the other hand, Comparative Example 1 used a simple mixture of the SiO particles and the SiC particles.

### Evaluation Example 1: Evaluation of Properties of Negative Active Material Composite

Each negative active material composite according to Examples 1 to 4 and Comparative Examples 1 to 3 were evaluated in the following method, and the results are shown in Table 2.
(1) Internal pore volume and BET specific surface area: A volume of internal pores was quantitatively measured by using BJH (Barrett-Joyner-Halenda) analysis equipment.

Each electrode plate portion of the unreacted regions of the rechargeable lithium battery cells which were once charged and discharged at 0.1 C was taken and put into a pore-measuring device (equipment name: ASAP series, manufacturer: Micromeritics Instrument Corp.) and then, heated at 10 K/min to 623 K and maintained for 2 hours to 10 hours (vacuum: 100 mmHg or less) for a pretreatment. Herein, the temperature and the time may be appropriately adjusted according to negative active material composite powder.

Subsequently, a pore volume was measured in liquid nitrogen controlled to have a relative pressure (P/Pₒ) of 0.01 or less. Specifically, the pore volume was measured by absorbing nitrogen under the relative pressure of 0.01 to 0.995 at 32 points and then, desorbing the nitrogen under the relative pressure to 0.14 at 24 points. Herein, the pore volume may be in general measured to the relative pressure (P/Pₒ) of 0.1 with BET.

(2) D50: An average particle diameter (D50) of the negative active material composites was measured by using PSA (particle size analyzer, Beckman Coulter, Inc.).

**(Table 2)**

| | Type of negative active material | Negative active material composite SPEC | | |
|---|---|---|---|---|
| | | Internal pore volume (cm³/g) | BET specific surface area (cm²/g) | D50 (µm) |
| Comparative Example 1 | SiO : SiC = 5 : 5 | 0.022 | 2.1 | SiO : 3.0 |
| | (blending) | | | SiC: 8.4 |
| Comparative Example 2 | SiO@SiC | 0.154 | 3.4 | 8.5 |
| Comparative Example 3 | SiO@SiC | 0.081 | 2.8 | 8.4 |
| Example 1 | SiO@SiC | 0.050 | 2.3 | 8.4 |
| Example 2 | SiO@SiC | 0.022 | 2.2 | 8.3 |
| Example 3 | SiO@SiC | 0.005 | 1.9 | 8.6 |
| Example 4 | SiO@SiC | 0.001 | 2.1 | 8.5 |

In Table 2, unlike the negative active material composites according to Comparative Examples 2 and 3, the negative active material composites of Examples 1 to 4 exhibited an internal pore volume of 5.0 × 10⁻² cm³/g (provided that it is greater than about 0 cm³/g). Specifically, referring to Examples 1 to 4 and Comparative Examples 2 and 3, an internal pore volume and a BET specific surface area of the negative active material composites varied according to the compression-molding pressure. More specifically, when the compression-molding pressure was set to be greater than 10 Mpa and particularly, 20 Mpa or more, the negative active material composites secured an internal pore volume of 5.0 x 10⁻² cm³/g or less (provided that it is greater than about 0 cm³/g). In addition, as the compression-molding pressure increased at 20 Mpa or more, the internal pore volume and the BET specific surface area of the negative active material composites tended to decrease.

On the other hand, Comparative Example 1 used the simple mixture of SiO particles and SiC particles, wherein each particle had an average internal pore size of 5.0 x 10⁻² cm³/g or less (provided that it is greater than about 0 cm³/g).

### Evaluation Example 2: Evaluation of Electrochemical Characteristics of Rechargeable Lithium Battery Cells

Each rechargeable lithium battery cell of Examples 1 to 4 and Comparative Examples 1 to 3 was evaluated with respect to electrochemical characteristics in the following method, and the results are shown in Table 3.
(1) Initial efficiency: The rechargeable lithium battery cells were once charged and discharged at 0.1 C and evaluated with respect to initial charge and discharge efficiency, and the results are shown in Table 3.
(2) Cycle-life characteristics: The rechargeable lithium battery cells were 100 times charged and discharged at 0.5 C at 25 °C. A ratio of discharge capacity at the first cycle to discharge capacity at the 100^{th} cycle was calculated, and the results are shown in Table 3.

**(Table 3)**

| | Type of negative active material | Rechargeable lithium battery cell SPEC | |
|---|---|---|---|
| | | Initial efficiency | Cycle-life |
| | | (F.C.E, %) | (@100 cyc) |
| Com parative Example 1 | SiO : SiC = 5 : 5 (blending) | 85.1 | 60 |
| Com parative Example 2 | SiO@SiC | 86.1 | 67 |
| Com parative Example 3 | SiO@SiC | 86.7 | 71 |
| Example 1 | SiO@SiC | 87.3 | 83 |
| Example 2 | SiO@SiC | 87.4 | 84 |
| Example 3 | SiO@SiC | 87.4 | 85 |
| Example 4 | SiO@SiC | 87.5 | 84 |

In Table 3, unlike the rechargeable lithium battery cells manufactured by using the negative active material mixture of Comparative Example 1 and the negative active material composites of Comparative Example 2 and 3, the rechargeable lithium battery cells manufactured by using the negative active material composites of Examples 1 to 4 maintained 80% or more of discharge capacity after the 100 cycles. First, Comparative Example 1 using the simple mixture of SiO particles and SiC particles exhibited an average internal pore of each particles in a range of 5.0 x 10⁻² cm³/g or less (provided that it is greater than about 0 cm³/g) but failed in overcoming a drawback of the SiC particles, resulting in deteriorating cycle-life of the rechargeable lithium battery cell.

Each of the negative active material composites according to Examples 1 to 4 and Comparative Examples 2 and 3, which is a composite including compound particles represented by SiOₓ (0<x≤2.0), silicon nanoparticles, and amorphous carbon, improved a cycle-life of the rechargeable lithium battery cells, compared with the negative active material mixture of Comparative Example 1.

However, each negative active material composite of Comparative Examples 2 and 3 exhibited an internal pore volume of greater than 5.0 × 10⁻² cm³/g and maintained about 70% of discharge capacity of the rechargeable lithium battery cells after the 100 cycles.

On the contrary, each negative active material composite of Examples 1 to 4 exhibited an internal pore volume of 5.0 × 10⁻² cm³/g or less (provided that it is greater than about 0 cm³/g) and secured 80% or more of discharge capacity of the rechargeable lithium battery cells even after the 100 cycles.

Accordingly, in order to improve cycle-life as well as initial efficiency of the rechargeable lithium battery cells, a negative active material which is a composite including the compound particles represented by SiOₓ (0<x≤2.0), silicon nanoparticles, and amorphous carbon and has an internal pore volume of 5.0 x 10⁻² cm³/g or less (provided that it is greater than about 0 cm³/g) should be used.

### [D50 Particle Diameter of Silicon Nanoparticles]

### Example 5

A negative active material composite of Example 5 was prepared by using silicon nanoparticles under the conditions described in Table 4. A negative electrode and a rechargeable lithium battery cell of Example 5 were manufactured in the same manner as in Example 2 except that the negative active material composite of Example 5 was used.

### Example 6

A negative active material composite of Example 6 was prepared by using silicon nanoparticles under the conditions described in Table 4. A negative electrode and a rechargeable lithium battery cell of Example 6 were manufactured in the same manner as in Example 2 except that the negative active material composite of Example 6 was used.

### Example 7

A negative active material composite of Example 7 was prepared by using silicon nanoparticles under the conditions described in Table 4. A negative electrode and a rechargeable lithium battery cell of Example 7 were manufactured in the same manner as in Example 2 except that the negative active material composite of Example 7 was used.

### Comparative Example 4

A negative active material composite of Comparative Example 4 was prepared by using silicon nanoparticles under the conditions described in Table 4. A negative electrode and a rechargeable lithium battery cell of Comparative Example 4 were manufactured in the same manner as in Example 2 except that the negative active material composite of Comparative Example 4 was used.

### Comparative Example 5

A negative active material composite of Comparative Example 5 was prepared by using silicon nanoparticles under the conditions described in Table 4. A negative electrode and a rechargeable lithium battery cell of Comparative Example 5 were manufactured in the same manner as in Example 2 except that the negative active material composite of Comparative Example 5 was used.

**(Table 4)**

| | Type of negative active material | Si nanoparticle SPEC | | | |
|---|---|---|---|---|---|
| | | Shape | D50 (nm) | Aspect ratio | XRD full width at half maximum (°) |
| Comparative Example 4 | SiO@SiC | flake | 300 | 4-20 | 0.22 |
| Comparative Example 5 | SiO@SiC | flake | 250 | 4-20 | 0.25 |
| Example 5 | SiO@SiC | flake | 200 | 4-20 | 0.3 |
| Example 6 | SiO@SiC | flake | 150 | 4-20 | 0.38 |
| Example 2 | SiO@SiC | flake | 100 | 4-20 | 0.61 |
| Example 7 | SiO@SiC | flake | 50 | 4-20 | 1.05 |

Specifically, in Examples 2 and 5 to 7 and Comparative Examples 4 and 5, the negative active material composites with a SiO@SiC structure were prepared under the same compression-molding pressure but by changing a D50 particle diameter and an XRD full width at half maximum of the silicon nanoparticles.

### Evaluation Example 3: Evaluation of Properties of Negative Active Material Composite

Each of the negative active material composites according to Examples 2 and 5 to 7 and Comparative Examples 4 and 5 was evaluated in the same method as in Evaluation Example 1, and the evaluation results are shown in Table 5.

**(Table 5)**

| | Type of negative active material | Negative active material SPEC | | |
|---|---|---|---|---|
| | | Internal pore volume (cm³/g) | BET specific surface area (cm²/g) | D50 (µm) |
| Comparative Example 4 | SiO@SiC | 0.023 | 2.2 | 8.4 |
| Comparative Example 5 | SiO@SiC | 0.024 | 2.1 | 8.5 |
| Example 5 | SiO@SiC | 0.025 | 2.2 | 8.4 |
| Example 6 | SiO@SiC | 0.024 | 2.3 | 8.3 |
| Example 2 | SiO@SiC | 0.022 | 2.2 | 8.3 |
| Example 7 | SiO@SiC | 0.022 | 2.1 | 8.4 |

In Table 5, each of the negative active material composites of Examples 2 and 5 to 9 and Comparative Example 4 and 5 exhibited almost equal internal pore volumes. Accordingly, the internal pore volumes of the negative active material composites turned out to more depend on the compression-molding pressure than the D50 particle diameter of the silicon nanoparticles.

### Evaluation Example 4: Evaluation of Electrochemical Characteristics of Rechargeable Lithium Battery Cells

Each of the rechargeable lithium battery cells of Examples 2 and 5 to 7 were evaluated with respect to electrochemical characteristics in the same method as in Evaluation Example 2, and the results are shown in Table 6.

**(Table 6)**

| | Type of negative active material | Rechargeable lithium battery cell SPEC | |
|---|---|---|---|
| | | Initial efficiency | Cycle-life |
| | | (F.C.E, %) | (@100 cyc) |
| Comparative Example 4 | SiO@SiC | 87.9 | 62 |
| Comparative Example 5 | SiO@SiC | 87.6 | 68 |
| Example 5 | SiO@SiC | 87.4 | 82 |
| Example 6 | SiO@SiC | 87.5 | 84 |
| Example 2 | SiO@SiC | 87.4 | 84 |
| Example 7 | SiO@SiC | 87.3 | 85 |

In Table 6, the rechargeable lithium battery cells manufactured by using each of the negative active material composites of Examples 2 and 5 to 7, but Comparative Examples 4 and 5 exhibited almost equal initial efficiency but different cycle-life characteristics. Specifically, each of the negative active material composites of Examples 2 and 5 to 7 and Comparative Examples 4 and 5 exhibited an internal pore volume of 5.0 × 10-2 cm³/g or less (provided that it is greater than 0 cm³/g) regardless of a D50 particle diameter of the silicon nanoparticles and secured 87% or more of initial efficiency of the rechargeable lithium battery cells.

However, each of the negative active material composites of Comparative Examples 4 and 5 used silicon nanoparticles with a D50 particle diameter of greater than 200 nm and maintained less than 70% of discharge capacity of the rechargeable lithium battery cells even after 100 cycles.

Accordingly, in order to improve a cycle-life as well as initial efficiency of the rechargeable lithium battery cells, a negative active material, which is a composite including compound particles represented by SiOₓ (0<x≤2.0), silicon nanoparticles, and amorphous carbon, wherein the silicon nanoparticles had a D50 particle diameter of 200 nm or less (provided that it is greater than 0 nm), having an internal pore volume of 5.0 × 10⁻² cm³/g or less (provided that it is greater than 0 cm³/g), needs to be used.

As discussed, embodiments can provide a negative active material composite for a rechargeable lithium battery, comprising compound particles represented by SiOₓ, where 0<x≤2.0; silicon nanoparticles having an average particle diameter, D50, of greater than zero and less than or equal to about 200 nm; and amorphous carbon, wherein an internal pore volume is greater than zero and less than or equal to about 5.0 × 10⁻² cm³/g.

Embodiments can provide a method of preparing a negative active material composite for a rechargeable lithium battery, comprising spray-drying a solution including a solvent, compound particles represented by SiOₓ, where 0<x≤2.0, and silicon nanoparticles; compression-molding a mixture including the obtained product of the spray-drying and the amorphous carbon precursor in a pressure range of greater than about 10 Mpa; and heat-treating the obtained product of the compression-molding to obtain the negative active material.

Embodiments can provide a negative electrode for a rechargeable lithium battery, comprising a current collector and a negative active material layer on the current collector, wherein the negative active material layer includes the negative active material composite of any one of the above embodiments.

Embodiments can provide a rechargeable lithium battery, comprising a positive electrode, a negative electrode, and an electrolyte, wherein the negative electrode is the negative electrode of other embodiments.

While this disclosure has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

### <Description of Symbols>

1: compound particles represented by SiOₓ (0<x≤2.0)
2: silicon nanoparticle
3: amorphous carbon

## Claims

1. A negative active material composite for a rechargeable lithium battery, comprising
compound particles represented by SiOₓ, where 0<x≤2.0;
silicon nanoparticles having an average particle diameter, D50, of less than or equal to about 200 nm (provided that it is greater than about 0 nm); and
amorphous carbon,
wherein an internal pore volume of the negative active material composite is less than or equal to about 5.0 × 10⁻² cm³/g, provided that it is greater than about 0 cm³/g.

2. The negative active material composite of claim 1, wherein
an average particle diameter, D50, of the silicon nanoparticles is about 50 nm to about 200 nm.

3. The negative active material composite of claim 1 or 2, wherein
an aspect ratio of the silicon nanoparticle is about 4 to about 20.

4. The negative active material composite of any one of claims 1 to 3, wherein
a full width at half maximum of an X-ray diffraction angle (2θ) using CuKa ray at the (111) plane of the silicon nanoparticles is about 0.3 ° to about 1.5 °.

5. The negative active material composite of any one of claims 1 to 4, wherein
an average particle diameter, D50, of the compound particles represented by SiOₓ (0<x≤2.0) is about 1 µm to about 10 µm.

6. The negative active material composite of any one of claims 1 to 5, wherein
the amorphous carbon is soft carbon, hard carbon, a mesophase pitch carbonized product, calcined coke, or a combination thereof.

7. The negative active material composite of any one of claims 1 to 6, wherein
the composite includes the compound particles represented by SiOₓ, where 0<x≤2.0 and the silicon nanoparticles in a weight ratio of about 8:2 to about 2:8.

8. The negative active material composite of any one of claims 1 to 7, wherein
based on the total weight of the negative active material composite, the compound particles represented by SiOₓ, where 0<x≤2.0, is included in an amount of about 5 wt% to about 90 wt%, the silicon nanoparticles are included in an amount of about 10 wt% to about 95 wt%, and the amorphous carbon is included in the balance.

9. The negative active material composite of any one of claims 1 to 8, wherein
an average particle diameter (D50) of the negative active material composite is about 2 µm to about 15 µm.

10. The negative active material composite of any one of claims 1 to 9, wherein an internal pore diameter of the negative active material composite is less than or equal to about 330 nm, provided that it is greater than about 0 nm; and/or
wherein a BET specific surface area of the negative active material composite is about 0.1 m²/g to about 10 m²/g.

11. The negative active material composite of any one of claims 1 to 10, wherein
the negative active material composite includes a matrix including the silicon nanoparticles and the amorphous carbon; and the compound particles represented by SiOx, where 0<x≤2.0, in the matrix;
optionally wherein the matrix includes secondary particles in which the silicon nanoparticles are aggregated; and a coating layer surrounding the outer surface of the secondary particle and the outer surface of the silicon nanoparticles and including the amorphous carbon.

12. A method of preparing a negative active material composite for a rechargeable lithium battery, comprising
spray-drying a solution including a solvent, compound particles represented by SiOₓ, where 0<x≤2.0, and silicon nanoparticles;
compression-molding a mixture including the obtained product of the spray-drying and the amorphous carbon precursor in a pressure range of greater than about 10 Mpa; and
heat-treating the obtained product of the compression-molding to obtain the negative active material of any one of claims 1 to 11.

13. The method of claim 12, wherein
the spray-drying is performed in a temperature range of about 120 °C to about 170 °C; and/or
wherein the compression-molding is performed in a pressure range of greater than about 10 MPa less than or equal to about 150 MPa; and/or
wherein the heat-treating is performed in a temperature range of about 700 °C to about 1100 °C.

14. A negative electrode for a rechargeable lithium battery, comprising
a current collector and a negative active material layer on the current collector,
wherein the negative active material layer includes the negative active material composite of any one of claims 1 to 12;
optionally wherein the negative active material layer further includes a conductive material, a binder, or a combination thereof.

15. A rechargeable lithium battery, comprising
a positive electrode, a negative electrode, and an electrolyte,
wherein the negative electrode is the negative electrode of claim 14.
